# EUROPEAN PATENT SPECIFICATION

(11) **EP 0 288 262 B1**
(45) Date of publication and mention of the grant of the patent: **02.11.1994**
(21) Application number: 88303549.5
(22) Date of filing: 20.04.1988
(51) Int. Cl.: G06F 15/20

(54) **Character processing system having editing function**
Zeichenverarbeitungssystem mit Ausbereitungsfunktion
Système pour traîtement de caractères avec fonction d'édition

(30) Priority: 22.04.1987 JP 99376/87
(43) Date of publication of application: 26.10.1988
(73) Proprietor: SHARP KABUSHIKI KAISHA, Osaka 545 (JP)
(72) Inventor: Sakamoto, Koichiro, Sakai-shi Osaka (JP); Yoshida, Hiroichi, Nara-shi, Nara-ken (JP)
(74) Representative: Hitchcock, Esmond Antony

(56) References cited:
- EP-A- 0 042 895
- WO-A-86/05294
- US-A- 4 370 645

## Description

The present invention relates to a character processing system having an editing function involving format setting, proportioned layout, character magnification and the like.

The term "format" as used herein refers to the format of a text including, for example, the size of characters, amount of line feed and maximum number of characters.

With such character processing systems heretofore known and having an editing function, the text is checked from line to line during preparation of the text for data other than the text itself, such as for format setting or tab setting, by changing over a screen from display of the text being prepared to a layout display and checking the locations where tab setting is made or a particular format is set, or by printing out the text prepared and checking the layout of the print.

Unexamined Japanese Patent Publication SHO 57-178563 further discloses a character processing system which is adapted to prepare a text with formats set for a plurality of areas and in which when it is desired to alter the format of the text in a particular area, the text can be searched from area to area for the format, and the format can be retrieved on a display.

However, the character processing systems of both types are unable to display on the text preparing screen how many items of editing data, for example, as to format setting or tab setting, are set in a particular line of the text. Accordingly, when a different format has been set in the text, it is impossible to immediately locate the line in which the format is changed. Thus, the systems have the drawback that it is impossible to recognize how the text being prepared is edited on the text preparing screen.

In another arrangement as shown in W086/05294, data is displayed on two screens, or on a single screen having two display areas. On one screen the format instructions in their high-language form are shown listed in association with the text they operate on. The same text, without the instructions, but after formatting, is shown on the other screen.

The present invention provides a character processing system having an editing function and comprising input means for entering text data and various instructions, text-editing data memory means for storing the text data and various items of editing data for the text data which are given by the various instructions on items such as formats, justification or character expansion, display means for displaying text data and various items of editing data and display control means for reading the stored data in response to an instruction from the input means to feed the data to the display means, said display control means being adapted to checking the text shown on the display means from line to line for editing data. It is characterised by further comprising text-editing data temporary storage means for temporarily storing the editing data set along with the corresponding text data, prior to feeding the information to the display means, editing data erasing means for erasing editing data on display when the editing data is recognized by the display control means in response to a display change-over instruction from the input means, and editing data analyzing means for searching the text stored in the text-editing data memory means, line by line, for editing data and outputting the retrieved editing data to the text on display at each line concerned in response to the said display change-over instruction, when the display control means recognizes no corresponding editing data on display.

The main object of the present invention is to provide a character processing system having an editing function and adapted to display on a text preparing screen various items of editing data set for the text shown on the screen when so required so as to prepare texts with an improved efficiency.

Editing data can be displayed for the text at each line concerned in response to an instruction from the input means as required, so that texts can be prepared efficiently and accurately. Furthermore, the limited display area on the screen of the display means can be used to the greatest possible extent by erasing the editing data which need not be displayed. This also assures efficient preparation of texts.

Further features and advantages of the invention will be apparent from the following description of an embodiment thereof , in which reference will be made to the accompanying drawings wherein:
Fig. 1 is a block diagram showing the basic construction of a character processing system of the invention having an editing function;
Fig. 2 is a block diagram showing the construction of a Japanese word processor embodying the invention;
Figs. 3 to 6 are flow charts illustrating the operation of the embodiment;
Fig. 7 is a diagram showing a data table for use in the embodiment; and
Fig. 8 is a diagram showing an example of edition data given on a display by the operation of the embodiment.

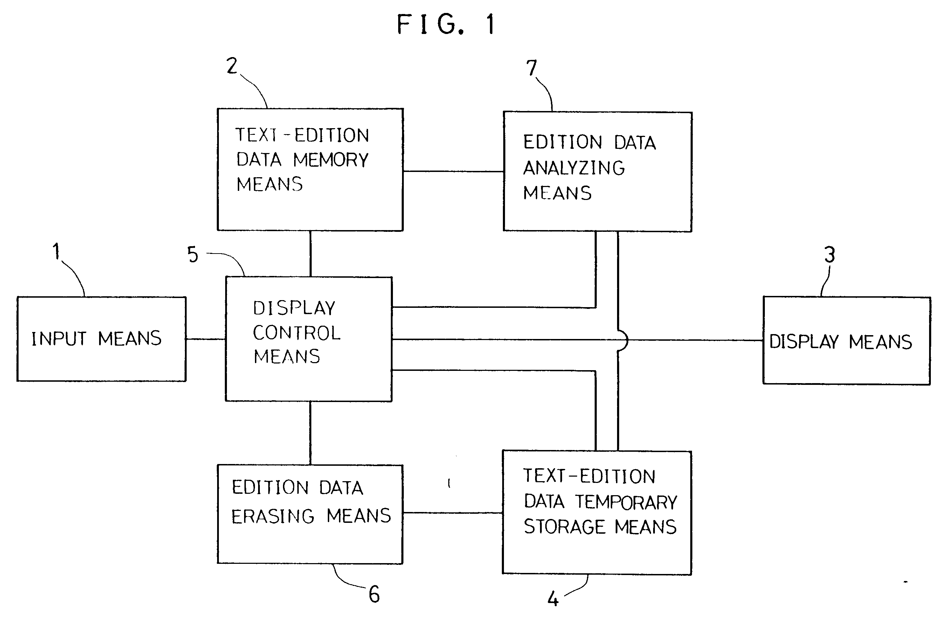

Fig. 1 is a block diagram showing the basic construction of a character processing system of the invention having an edition function.

Indicated at 1 is input means for entering text data and various instructions. Indicated at 2 is text-edition data memory means for storing text data and various items of editing data for the text data which are given,by the various instructions, on items such as formats, justification or character expansion. Indicated at 3 is display means for displaying text data and various items of editing data. Indicated at 4 is text-editing data temporary storage means for temporarily storing the text data and the editing data set for the text data to feed these items of data to the display means 3. Indicated at 5 is display control means for reading out data from the text-edition data temporary storage means 4 in response to an instruction from the input means 1 to feed the data to the display means 3 and checking the text shown on the display means 3 from line to line for editing data. Indicated at 6 is editing data erasing means for erasing editing data from the display when the editing data is recognized by the display control means 5 in response to a display change-over instruction from the input means 1. Indicated at 7 is editing data analyzing means for searching the text stored in the text-editing data memory means 2 from line to line for editing data and outputting the retrieved editing data to the text on display at each line concerned, when the display control means 5 recognized no editing data on display in response to the display change-over instruction from the input means 1.

An embodiment of the invention will be described below which is a character processing system having the above basic construction and an editing function.

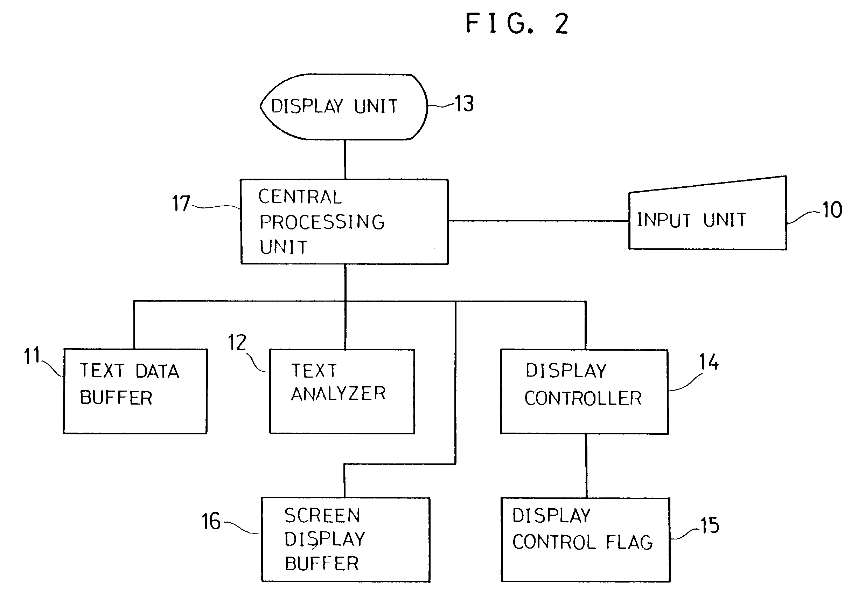

Fig. 2 is a block diagram showing the construction of the embodiment, i.e., a Japanese word processor. The embodiment has an input unit 10 serving as the input means and comprising a keyboard which has character input keys for preparing texts, a store key for storing the text prepared, a recall key for recalling the text prepared, data editing setting keys for setting various items of edition data as to format setting, tab setting, etc., instruction keys for entering various instructions, and a change-over key for giving an instruction to cause a display unit 13 to display editing data for the text shown thereon at each line concerned or to erase edition data from the text on display.

The text data and editing data output from the input unit 10 is fed to a central processing unit 17. The central processing unit 17, which comprises a 16-bit microcomputer, has the text analyzer, screen display buffer and display controller to be described later and performs the function of the editing data analyzing means, the display control means, the editing data erasing means and the text-editing data temporary storage means according to a program stored in an unillustrated ROM. The central processing unit 17 further reads out text data and various items of editing data from a text data buffer 11 serving as the text-editing data memory means and feeds these items of data to the display unit 13.

The display unit 13 comprises, for example, a CRT or LCD and displays the text data entered from the input unit 10, the text data retrieved from the text data buffer 11, the edition data set for the retrieved text data, etc. The text data and various items of editing data entered by the input unit 10 are stored via the central processing unit 17 in the text data buffer 11, which usually comprises an external memory device such as a floppy disk. In response to an instruction from the central processing unit 17, the text analyzer 12, which serves as the text-editing data analyzing means, inquires of the next data buffer 11 what editing data is set for each line of the text stored therein, and feeds the result of analysis to the screen display buffer 16 serving as the text-editing data temporary storage means and to be described below.

The text data stored in the text data buffer 11 is displayed in a specified display area of the display unit 13 under the control of the display controller 14 in response to an instruction given thereto by the central processing unit 17. The editing data stored in the text data buffer 11 is displayed in the form of symbols at the heads of respective lines of the text data shown on the display unit 13. The display controller 14 has a display control flag 15, which is "on" when the editing data is shown on the display unit 13. The screen display buffer 16 temporarily stores the text data and editing data output from the display controller 14.

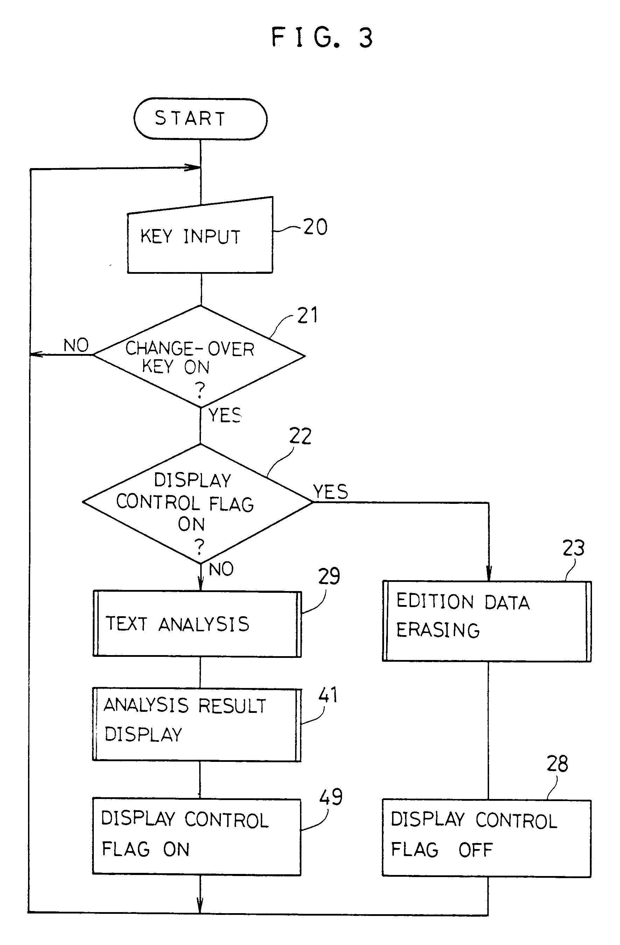

Next, the operation of the embodiment will be described with reference to the flow charts of Fig. 3 to 6. It is assumed that text data and some items of editing data entered by the input unit 10 are presented on the display unit 13 and are stored in the text data buffer 11. The items of editing data in the following description of the embodiment are format and tab data items.

First, the operator actuates the change-over key on the input unit 10 to give an instruction for a change-over of the text data (steps 20, 21), whereupon the central processing unit 17 instructs the display controller 14 to check the display unit 13 as to whether editing data as to tab setting, justification, character expansion, etc. is currently on display. In response to the instruction, the display controller 14 checks the display control flag 15 and transfers to the central processing unit 17 the result as to whether the editing data is on display.

When the display control flag 15 is "on", indicating that the editing data is on display (step 22), the central processing unit 17 instructs the display controller 14 to erase the editing data from the screen of the display unit 13, whereupon the display controller 14 erases the editing data from the screen display buffer 16 as specified by the erasing instruction (step 23).

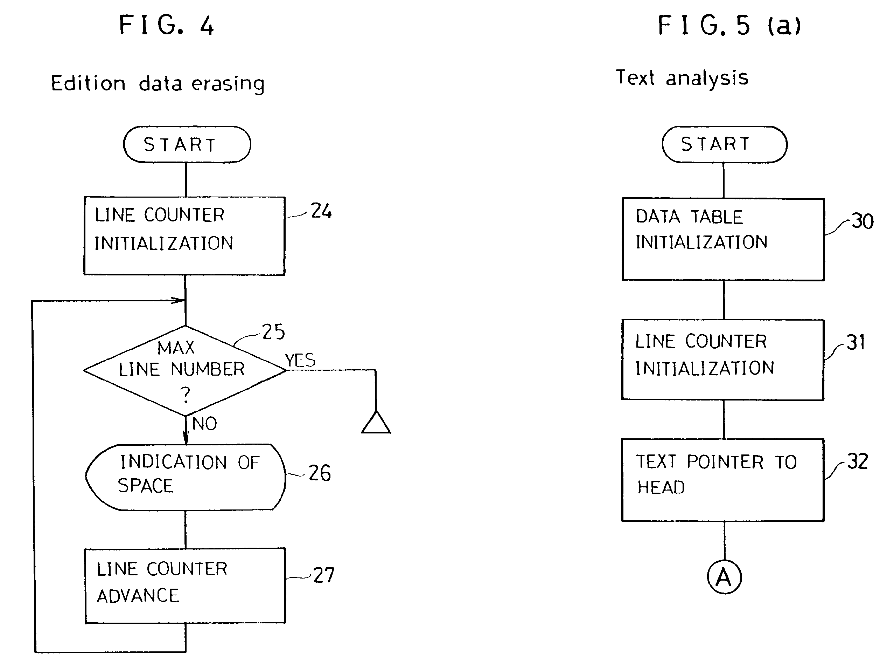

The flow chart of Fig. 4 shows the procedure for erasing the editing data. First, a line counter is initialized to set the erasing start position at the head line of the text (step 24), and step 25 inquires whether all the lines on the display unit 13 available for display are used for the text. If the inquiry is answered in the negative, an indication of space (vacancy) is given at the portion where the editing data is erased (step 26). The line counter is then advanced by plus 1 for processing the following lines (step 27). If the answer to the inquirity of step 25 is affirmative, the editing data is erased, followed by the subsequent step . The data (text data) remaining unerased in the screen display buffer 16 is held on display on the unit 13 by the central processing unit 17. The display control flag 15 is then turned "off" (step 28).

When the display control flag 15 is found to be "off" in step 22, indicating that no editing data is on display, the central processing unit 17 instructs the text analyzer 12 to analyze the data stored in the text data buffer 11 (step 29).

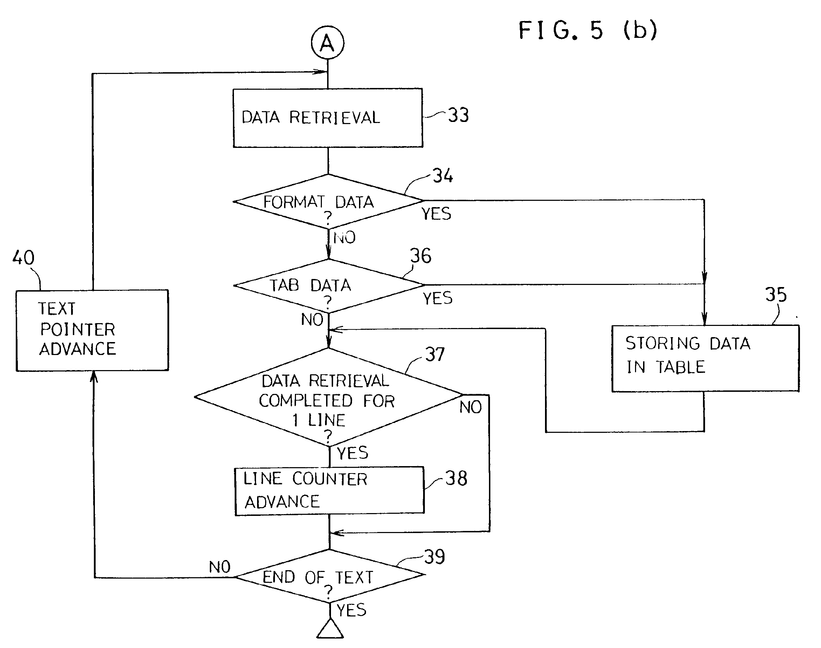

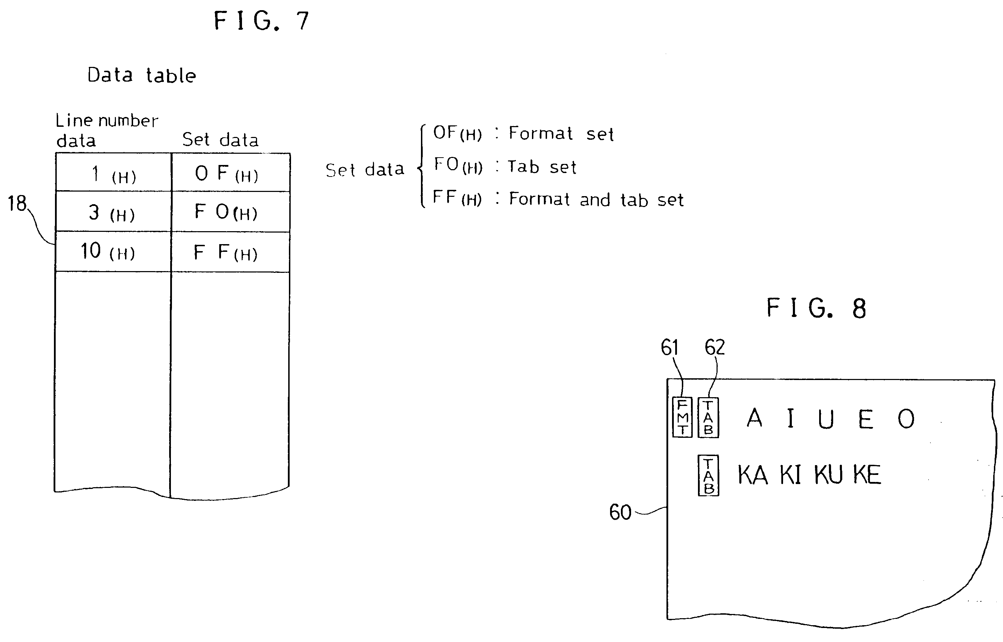

With reference to the flow charts of Figs. 5(a), 5(b), the text is analyzed by the following procedure. First, a data table provided in the text analyzer 12 is initialized (step 30), and the line counter is then initialized (step 31). As seen in Fig. 7, the data table 18 comprises a store for storing the line number data and a store for storing the set editing data. When the editing data to be handled involves format setting and tab setting, for example, the set data includes "OF" (format set), "FO" (tab set) and "FF" (format and tab set), i.e. three data items.

After the initialization of the data table 18 and the line counter, the text analysis start position is set at the head of a text pointer (step 32), and the text data indicated by the pointer is read out of the text data buffer 11 (step 33). The text data thus read out contains various items of editing data.

Next, the text data is checked as to whether format data is set therefor (step 34). If the format data is found to be set, "OF" is registered in the set data store of the data table 18. If otherwise, step 36 checks whether tab data is set for the text data. When it is set, "FO" is registered in the set data store of the data table 18. When format and tab data is found set, "FF" is registered in the set data store of the data table 18. If no tab data is found to be set in step 36, step 37 inquires whether the data for one line of the text has been completely retrieved. When the answer is affirmative, the line counter is advanced by plus 1 (step 38), and step 39 subsequently inquires whether the data for the whole sentence has been completely retrieved. If the answer to step 39 is negative, the text pointer is advanced (step 40). The sequence returns to step 33 to repeat the foregoing steps 33 to 39.

On completion of the analysis of the text, the result of analysis is displayed (step 41).

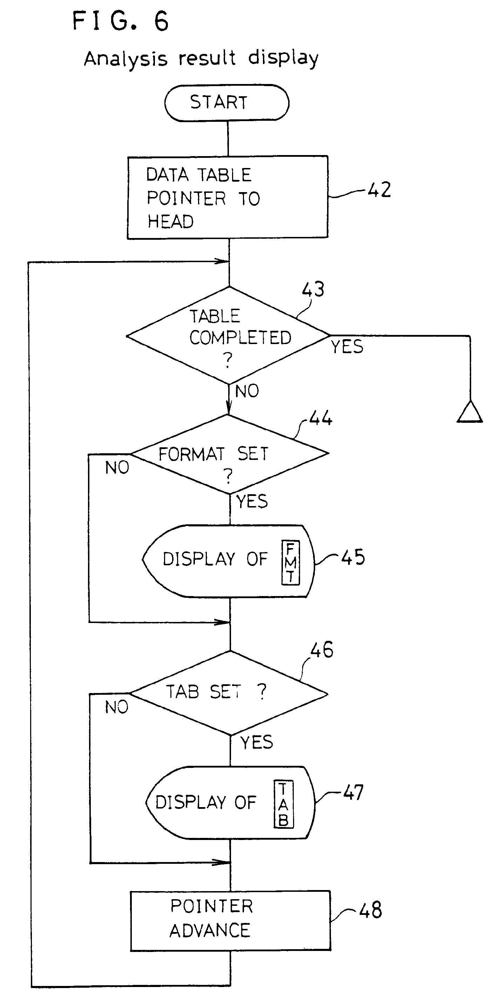

The flow chart of Fig. 6 shows the procedure for displaying the analysis result. First, a data table pointer is brought to the head position (step 42), and step 43 inquires whether display for the data table 18 has been completed. If the answer is negative, step 44 inquires whether format data is registered. When the format data is registered, a format data symbol is displayed at the specified line (step 45). Next, step 46 inquires whether tab data is registered. If it is registered, a tab data symbol is displayed at the specified line (step 47). The pointer is then advanced (step 48), followed by step 43 again for the display of analysis result for the next line. On completion of analysis result display for the entire data table 18, the display control flag is set to "ON" state (step 49), whereby the edition data is displayed at each line concerned of the text shown on the text preparing screen.

Fig. 8 is a diagram showing an example of edition data shown on the screen 60 of the display unit 13. An item of format data 61 and an item of tab data 62 are shown at the head of the first line of the text on display. These data items are symbolized by respective particular characters.

As will be apparent from the diagram, format and tab setting is made for the first line of the text "A I U E O" the HIRAGANA characters and tab setting only is made for the "KA KI KU KE" in HIRAGANA characters.

The display enables the operator to readily recognize the edition data set for the text.

Although format and tab setting only is displayed according to the present embodiment, other items of edition data (such as justification and character expansion) may be displayed similarly.

Although the embodiment described above is a Japanese character processing system, the embodiment can of course be adapted for use as an English character processing system.

## Claims

1. A character processing system having an editing function comprising:
input means (1) for entering text data and various instructions,
text-editing data memory means (2) for storing the text data and various items of editing data for the text data which are given by the various instructions on items such as formats, justification or character expansion,
display means (3) for displaying text data and various items of editing data, and
display control means (5) for reading out the stored data in response to an instruction from the input means to feed the data to the display means, said display control means being adapted to checking the text shown on the display means from line to line for editing data,
characterised in that it further comprises
text-editing data temporary storage means (4) for temporarily storing the editing data set, along with the corresponding text data, prior to feeding the information to the display means,
editing data erasing means (6) for erasing editing data on display when editing data is recognized by the display control means (5) and in response to a display change-over instruction from the input means (1) and
editing data analyzing means (7) for searching the text stored in the text-editing data memory means (2), line by line, for editing data and for outputting the retrieved editing data to the text on display at each line concerned in response to said display change-over instruction, when the display control means recognizes no corresponding editing data on display.

2. A system as defined in Claim 1 wherein the input means (1) comprises a keyboard input device.

3. A system as defined in Claim 2 wherein the keyboard input device has a key for setting editing data, and a change-over key for causing the display means to show editing data thereon or erasing editing data from the display means.

4. A system as defined in Claim 1 wherein the display means comprises a cathode-ray tube.

5. A system as defined in Claim 1 wherein the text-editing data temporary storage means comprises a screen display buffer (16).

6. A system as defined in Claim 1 wherein the display control means comprises a display control flag (15) which is on when editing data is shown on the display means (3) or off when no editing data is shown on the display means (3).

## Patentansprüche

1. Zeichenverarbeitungssystem mit Editierfunktion, mit:
- einer Eingabeeinrichtung (1) zum Eingeben von Textdaten und verschiedenen Anweisungen;
- einer Texteditierdaten-Speichereinrichtung (2) zum Abspeichern von Textdaten und verschiedenen Editiereinzeldaten für die Textdaten, die durch verschiedene Anweisungen zu Einzelpunkten wie Formaten, der Ausrichtung oder der Zeichenvergrößerung eingegeben sind;
- einer Anzeigeeinrichtung (3) zum Darstellen von Textdaten und verschiedenen Editiereinzeldaten; und
- einer Anzeigesteuereinrichtung (5) zum Auslesen der abgespeicherten Daten auf eine Anweisung von der Eingabeeinrichtung hin, um die Daten der Anzeigeeinrichtung zuzuführen, wobei die Anzeigesteuereinrichtung so ausgebildet ist, daß sie den auf der Anzeigeeinrichtung dargestellten Text Zeile für Zeile nach Editierdaten überprüft;
**dadurch gekennzeichnet,** daß es ferner folgendes aufweist:
- eine Texteditierdaten-Zwischenspeichereinrichtung (4) zum Zwischenspeichern der eingestellten Editierdaten zusammen mit den zugehörigen Textdaten, bevor die Information der Anzeigeeinrichtung zugeführt wird;
- eine Editierdaten-Löscheinrichtung (6) zum Löschen von Editierdaten aus der Anzeige, wenn von der Anzeigesteuereinrichtung (5) Editierdaten erkannt werden, und auf eine Anzeigeumschaltanweisung von der Eingabeeinrichtung (1) hin; und
- eine Editierdaten-Analysiereinrichtung (7) zum Durchsuchen des in der Texteditierdaten-Speichereinrichtung (2) abgespeicherten Texts Zeile für Zeile nach Editierdaten, und zum Ausgeben der gefundenen Editierdaten für den dargestellten Text für jede betroffene Zeile, auf die Anzeigeumschaltanweisung hin, wenn die Anzeigesteuereinrichtung keine entsprechenden dargestellten Editierdaten erkennt.

2. System nach Anspruch 1, bei dem die Eingabeeinrichtung (1) eine Tastatur-Eingabevorrichtung aufweist.

3. System nach Anspruch 2, bei dem die Tastatur-Eingabevorrichtung eine Taste zum Einstellen von Editierdaten und eine Umschalttaste aufweist, um zu bewirken, daß die Anzeigeeinrichtung Editierdaten zeigt, oder um Editierdaten aus der Anzeigeeinrichtung zu löschen.

4. System nach Anspruch 1, bei dem die Anzeigeeinrichtung eine Kathodenstrahlröhre aufweist.

5. System nach Anspruch 1, bei dem die TexteditierdatenZwischenspeichereinrichtung einen Schirmanzeigepuffer (16) aufweist.

6. System nach Anspruch 1, bei dem die Anzeigesteuereinrichtung ein Anzeigesteuerflag (15) aufweist, das eingeschaltet ist, wenn Editierdaten auf der Anzeigeeinrichtung (3) dargestellt werden, und das ausgeschaltet ist, wenn keine Editierdaten auf der Anzeigeeinrichtung (3) dargestellt werden.

## Revendications

1. Système de traitement de caractères prévoyant une fonction d'édition comportant:
des moyens d'entrée (1) pour l'entrée de données de texte et diverses consignes,
des moyens d'édition de données de texte de mémoire (2) pour la mise en mémoire des données de texte ainsi que divers postes de données d'édition qui sont précisées par les diverses consignes de postes telles que formats, justification ou expansion de caractère,
des moyens d'affichage (3) permettant d'afficher les données de texte et divers postes de données d'édition,
des moyens de commande d'affichage (5) pour la lecture des données en mémoire en réponse à une consigne reçue des moyens d'entrée de fourniture de données aux moyens d'affichage, lesdits moyens de commande d'affichage étant agencés pour vérifier le texte affiché ligne par ligne aux moyens d'affichage pour éditer les données,
caractérisé en ce qu'il comporte en outre
des moyens de mise en mémoire provisoire de données d'édition de texte (4) permettant la mise en mémoire provisoire du groupe de données d'édition, avec les données correspondantes de texte, avant la fourniture des renseignements aux moyens d'affichage,
des moyens d'effacement de données d'édition (6) pour effacer les données d'édition affichées lorsque des données d'édition sont reconnues par les moyens de commande d'affichage (5) et en réponse à une consigne de transition d'affichage à partir des moyens d'entrée (1), et
des moyens d'analyse de données d'édition (7) pour procéder ligne par ligne, dans le texte retenu dans les moyens de mémoire de données d'édition de texte (2), à la recherche de données d'édition et pour la sortie des données d'édition ainsi récupérées dans le texte affiché à chaque ligne correspondante en réponse à ladite consigne de transition, lorsque les moyens de commande d'affichage ne reconnaissent à l'affichage aucune consigne correspondante d'édition.

2. Système tel que défini à la revendication 1 dont les moyens d'entrée (1) comportent un dispositif d'entrée à clavier.

3. Système tel que défini à la revendication 2 dont le dispositif d'entrée à clavier prévoient une touche de configuration de données d'édition, et une touche de transition pour assurer aux moyens d'affichage l'affichage des données d'édition y relatives ou l'effacement aux moyens d'affichage des données d'édition.

4. Système tel que défini à la revendication 1 dont les moyens d'affichage comporte un tube à rayons cathodiques.

5. Système tel que défini à la revendication 1 dont les moyens de mise en mémoire provisoire de données d'édition de texte comportent un tampon d'écran d'affichage (16).

6. Système tel que défini à la revendication 1 dont les moyens de commande d'affichage prévoient un drapeau de commande d'affichage (15) qui est à l'état activé en présence d'affichage de données d'édition aux moyens d'affichage (3) ou à l'état désactivé en l'absence d'affichage de données d'édition aux moyens d'affichage (3).
